# EUROPEAN PATENT SPECIFICATION

(11) **EP 3 822 497 B1**
(45) Date of publication and mention of the grant of the patent: **23.08.2023**
(21) Application number: 20208281.4
(22) Date of filing: 18.11.2020
(51) Int. Cl.: F16B 21/07, F16B 21/08, F16B 1/00

(54) **FASTENING CLIP ASSEMBLY**
BEFESTIGUNGSKLAMMERANORDNUNG
ENSEMBLE PINCE DE FIXATION

(30) Priority: 18.11.2019 EP 19209733; 19.12.2019 EP 19218357; 05.05.2020 EP 20173052
(43) Date of publication of application: 19.05.2021
(73) Proprietor: Illinois Tool Works INC., Glenview, IL 60025 (US)
(72) Inventor: DIEZ HERRERA, Victor, Illinois, 60025 (US)
(74) Representative: HGF

(56) References cited:
- WO-A1-2013/130496
- JP-A- 2003 072 508
- US-B2- 9 453 523

## Description

The present invention generally relates to the field of fasteners and in particular, to the field of fastening clips for attaching one or more components, such as airbag devices, to an external structure. More specifically, the present invention relates to a fastening clip assembly for attaching a side-impact airbag or curtain-type airbag to a vehicle structure.

### Introduction

Airbags are safety devices that are increasingly being used in the motor industry and which, in combination with other safety components, such as seatbelts, help to reduce fatal accidents in the case of collisions. The tests to which the vehicles have been subjected, as well as mortality statistics, have clearly demonstrated that the use of airbags can considerably improve the safety of automobile occupants and, when combined with other forms of passive safety, such as seat belts, significantly reduce mortality in the case of serious accidents.

Today, manufacturers produce frontal airbags, which are designed to protect the driver and/ or passenger in the event of a head-on collision and, considering their positions, lateral airbags that are installed behind the posts and/or in the sides of the vehicle seats, along with curtain airbags.

Airbags of the curtain type are usually located in the part close to the roof on the sides of the automobile, e.g. situated above the front and rear doors. Such airbags have very rigorous requirements with regards to the goals set for them and the technical challenges that have to be overcome. Typical challenges may be their location in the vehicle and the way they are fastened, required deployment time and the time that the airbag is required to remain inflated. Other challenges may come from the fact that there is only a short distance between the body and the occupant and that there is little vehicle material between the occupant and an impacting vehicle. For example, it is essential that airbags are deployed in a fraction of a second, giving rise to an enormous snatch force on their attachment components, which then suffer the consequences of that impact.

Further, when installing new or restore previously deployed airbags, it is well known in the industry that the installation or restoration is tedious work, comprising steps, such as, (i) dismantling all the attachments of the airbag, (ii) replacing the airbag and installing a new one, and then again (iii) fitting all its attachments. The work involved generally requires the installer to at least partly manually assemble the clip components with the airbag and push the assembly into a vehicle panel or structure to attach or operably couple the airbag to the vehicle.

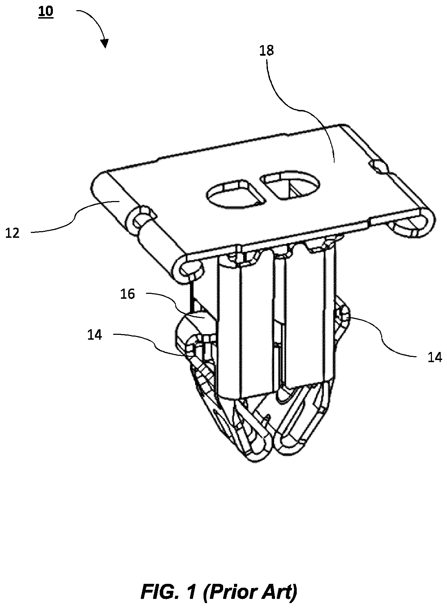

Figure 1, for example, illustrates a typical fastener clip 10 used for the attachment of airbags, such as, side-impact or curtain airbags, that is of the type formed by a body from which extends a head portion 12. The head portion typically has a lower surfaces which bear against the outer surface of the attachment panel of the vehicle when the clip is entered into it. The clip 10 comprises laterally protruding tangs 14 having upper surfaces 16 configured to bear against an inner surface of the attachment panel so as to "sandwich" the panel surface between the head portion 12 and the upper surfaces 16 of the tangs 14.

Clip 10 is designed so as to either provide an unloaded connection, where the tangs 14 simply prevent the clip 10 from sliding out of the mounting aperture once installed, or a connection loaded only if the dimensions of the panel surface (thickness) and aperture (rectangular cut-out) are suitably matched to the clip design. In the event of an unloaded connection (i.e. without resilient springs), the bias or spring load may be provided by a different component of the airbag module.

Clip 10 has a flat upper surface 18 which the installer presses against when pushing the fastening clip 10 into the mounting aperture. However, the installer may find it difficult to detect that the clip has achieved a final assembly position. Consequently, the installer may spend unnecessary time continuing to push the clip into the panel or, more significantly, may be unaware that a clip is incorrectly mounted into the panel. Incorrectly mounted clips may then unexpectedly fail when the airbag is deployed.

US 9 453 523 B2 illustrates a fastener device in the field of airbags.

Therefore, it is an object of the present invention to provide an improved fastening clip, suitable for attaching airbags, such as side-impact or curtain airbags, that is capable of providing instant feedback to the installer during installation, clearly indicating that the airbag clip has reached its final assembly position.

### Summary of the Invention

According to the invention, there is provided a fastening clip assembly according to claim 1, for mounting a first component to a second component, comprising:
a male member, having a first head portion, provided at a first proximal end along a first central axis, and a coupling portion, extending from said first head portion along said first central axis towards a first distal end;
a female member, comprising a second head portion, provided at a second proximal end along a second central axis, a body portion, extending from said second head portion along said second central axis towards a second distal end, said body portion having a central aperture configured to couplingly receive said coupling portion of said male member and at least one elastically deflectable retaining member, adapted to fixingly engage when inserted into an orifice of the second component, and
at least one indicator member, extending from said first head portion and away from said first central axis towards said first distal end, adapted to deflect laterally outward from a first position towards a second position and operably engage with said first head portion, when abuttingly engaged with an upper surface of said second head portion, during use.

The fastening clip of the present invention provides the advantage of providing instant verification to the installer that the clip assembly, including the associated airbag, is correctly and sufficiently mounted into the attachment panel. In particular, the laterally extending indicator members are only moved into engagement with the head portion (i.e. providing a tactile indicator to the user) when the male and female members are correctly and fully coupled therefore providing a very reliable but also simplistic feature.

Advantageously, said at least one indicator member may be configured to provide a tactile feedback when in said second position.

In this way, the fastening clip provides an indication of correct mounting of the clip to the attachment surface directly to the installer during installation. Thus, any subsequent testing or checking step is unnecessary.

Advantageously, said at least one indicator member may be configured to move into said second position when said male member is operably coupled with said female member. Further advantageously, said indicator member is resiliently biased towards said first position.

Thus, the indicator member may not be accidentally moved towards its second position, thereby preventing erroneous verification before the clip is correctly mounted to the attachment panel.

The first head portion comprises a substantially planar top surface extending in a direction substantially transverse to said first central axis.

In this way, the installer is presented with a large surface area on which to press against when installing the clip. Risk of injury is thereby reduced due the ergonomic design.

At least a portion of said at least one indicator member is configured to protrude past said substantially planar top surface when said at least one indicator member is in said second position. Alternatively, said at least one portion of said at least one indicator member may be a projection from an indicator top surface of said at least one indicator member. Preferably, said substantially planar top surface may comprise at least one aperture adapted to traversingly receive at least said portion of said at least one indicator member

In these ways, the clip provides a distinctive tactile verification to the installer when the clip is correctly mounted, through easily noticeable movement of the indicator members.

Advantageously, said coupling portion may comprise at least one clamping element adapted to operably engage with said retaining member when said male member is fixingly engaged with said female member.

Advantageously, said at least one indicator member may comprise an engagement portion configured to operably engage with said second head portion during use.

In this way, the indicator member may be held in the verification position and the clip may retain this position even after installation is completed.

Preferably, said at least one indicator member may comprise a first indicator member and a second indicator member, radially opposed to said first indicator member with respect to said first central axis, each one extending from said first head portion and away from said first central axis towards said first distal end when in said first position. In this way, the user is provided with verification of correct clip mounting by even more distinctive movement of more than one indicator member.

Preferably, said first central axis and said second central axis may be arranged coaxial when said male member is operably engaged with said female member.

### Brief Description of the Drawings

Embodiments of the invention will now be described, by way of example only, with reference to the accompanying drawings, in which:
**Figure 1** shows a perspective view of a fastening clip of the prior art;
**Figure 2** shows a side view of an example embodiment of a fastening clip of the present invention with the male member fully inserted into the female member;
**Figure 3** shows (a) a perspective view, (b) a front view, (c) a top view, and (d) a side view of the male member of the fastening clip of Figure 2;
**Figure 4** shows a side view of the female member of the fastening clip of Figure 2;
**Figure 5** shows (a) a perspective view, and (b) a front view of a fastening clip of Figure 2 with the male member partially inserted into the female member;
**Figure 6** shows a front view of a fastening clip of Figure 2 mounted in the opening of an attachment panel;
**Figure 7** shows (a) a perspective view, (b) a front view, (c) a top view, and (d) a side view of the male member of a further example embodiment of the fastening clip of the present invention;
**Figure 8** shows (a) a perspective view, and (b) a front view of a fastening clip of Figure 7 with the male member partially inserted into the female member;
**Figure 9** shows a side view of an example embodiment of a fastening clip of the Figure 7 with the male member fully inserted into the female member;
**Figure 10** shows a front view of a fastening clip of Figure 7 mounted in the opening of an attachment panel;
**Figure 11** shows a perspective view of the assembled male and female member of yet another example embodiment of a fastening clip of the present invention;
**Figures 12** shows the assembled fastening clip of Figure 11 in a (a) front-view, (b) side-view, (c) top-view and (d) bottom-view;
**Figures 13** show cross-sectional views of the assembled fastening clip, (a) along a section plane parallel to a central longitudinal axis and (b) along a section plane normal to the central longitudinal axis, and
Figures 14 (a), (b) and (c) is a schematic illustration of an assembly sequence of the fastening clip of Figure 11, with the male member being inserted into and fully engaged with the female member.

In the drawings, like reference numerals refer to like parts.

### Detailed Description of Examples

The described example embodiment relates to a fastening clip suitable for securing paraphernalia and accessories. The embodiment(s) of the invention are normally applied in vehicles. Although the invention is described with respect to vehicles, the invention is not restricted to vehicles altogether, but may also be used in other structures requiring attachment of accessories or peripheral components to a structure.

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

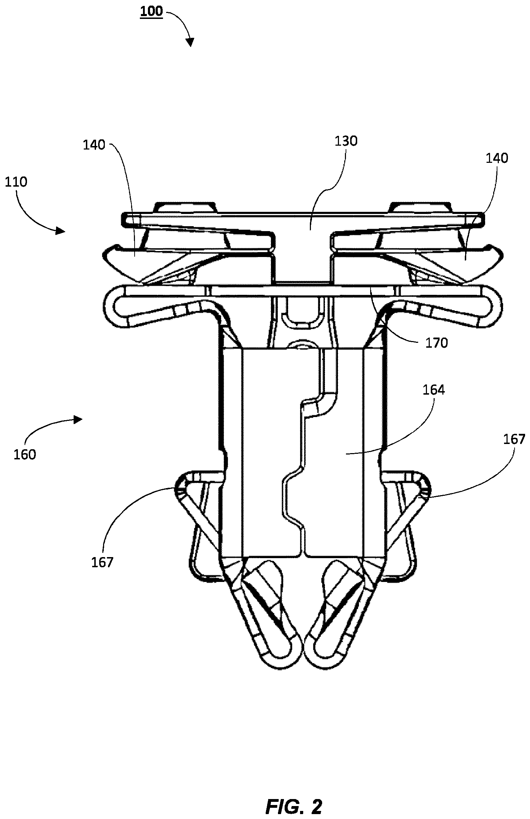

Referring now to Figures 2 to 6, a first example embodiment of the fastening clip 100 of the present invention is shown before, during and after it is used for assembly, i.e. when securing an airbag to an attachment panel. In particular, the fastening clip 100 of the present invention includes an improved fastening clip of the type including a male member 110 insertable into a female member 160. The male member 110 includes a first head portion 130 at a first proximal end 112 from which extend indicator members 140, as well as a coupling portion 118 extending from the first head portion 130 towards a first distal end 114. The female member 160 includes a second head portion 170 at a second proximal end 162 and a body portion 164 with retaining members 167 adapted to fixingly engage with an orifice in the attachment panel. The indicator members 140 are adapted to deflect laterally outward from a first central axis ***A*** of the male member 110 as they abuttingly engage with the second head portion 170, and thus engage with the first head portion 130 when in use. The improvements comprise assembly verification of the fastening clip 100 which is detectable by the operator when the fastening clip 100 is correctly assembled, as will be explained below. The assembly verification may be a tactile feedback or a tactile deflection, provided by the indicator members 140.

Fastening clips 100 for airbags, such as those according to this invention, are inserted into an opening made in the surface of the attachment panel 300. The body portion 164 of the female member 160 couplingly receives the coupling portion 118 of the male member 110 as it is inserted into the opening during use. The first and second head portions 130, 170 of the respective male and female members 110, 160 abuttingly engage with a surface of the opening during use and are configured to engage and deflect the indicator members 140 from a first position towards and into a second position.

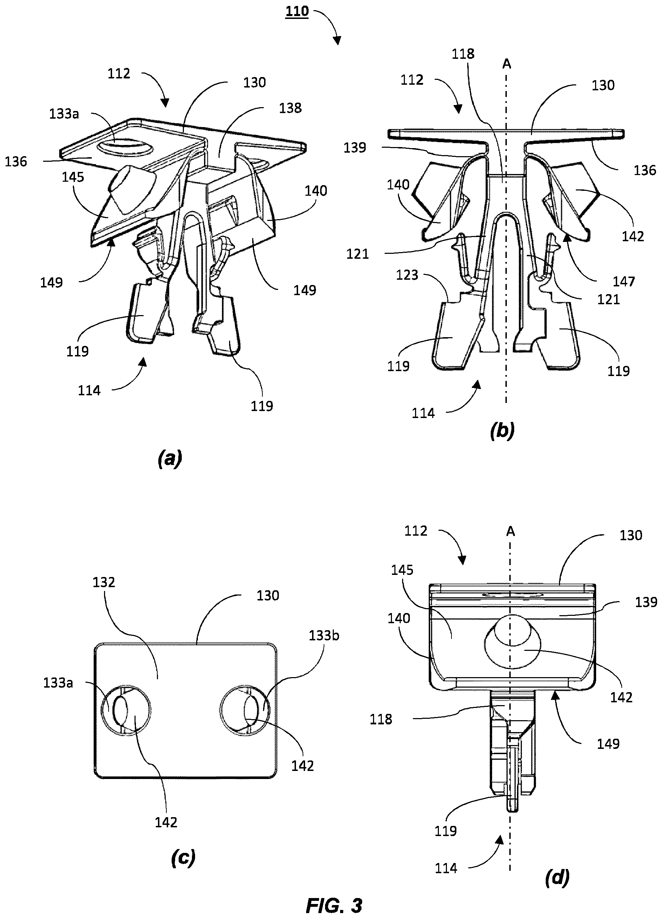

The male member 110 is shown in more detail in Figure 3. The male member 110 has a first head portion 130 and a coupling portion 118 extending away from the first head portion 130 along a first central axis ***A*.** The first head portion 130 is provided at a first proximal end 112 of the male member 110 and the coupling portion 118 extends from the first head portion 130 to a first distal end 114 of the male member 110.

As the coupling portion 118 extends away from the first head portion 130 it bifurcates into a pair of legs 121 with a slot in between. Each leg 121 of the pair extends in a direction substantially parallel to the first central axis towards the first distal end 114, terminating in a clamping element 119. The legs 121 are adapted to resiliently deform inwards when the legs 121 or the clamping elements 119 are subjected to a squeezing force which presses the legs 121 towards each other.

Clamping elements 119 include upper surfaces 123 configured to bear against the inner surface 301 of the attachment panel 300 when the male member 110 is fully inserted into the female member 160. In this way, the male member 110 contributes to the fixing engagement of the fastening clip 100 to the attachment panel 300.

Positioned underneath the first head portion 130 are a pair of indicator members 140. The indicator members 140 are opposingly arranged on either side of a central rib 138 provided along the lower surface 136 of the first head portion 130.

The indicator members 140 are provided in the form of a pair of flaps, each joined to the central rib 138 via an elongate shoulder 139. Each flap has an inner edge, as well as, an upper surface 145 and a lower surface 147. The inner edge of each flap extends to form the elongate shoulder, thereby mounting the indicator member 140 to the central rib 138.

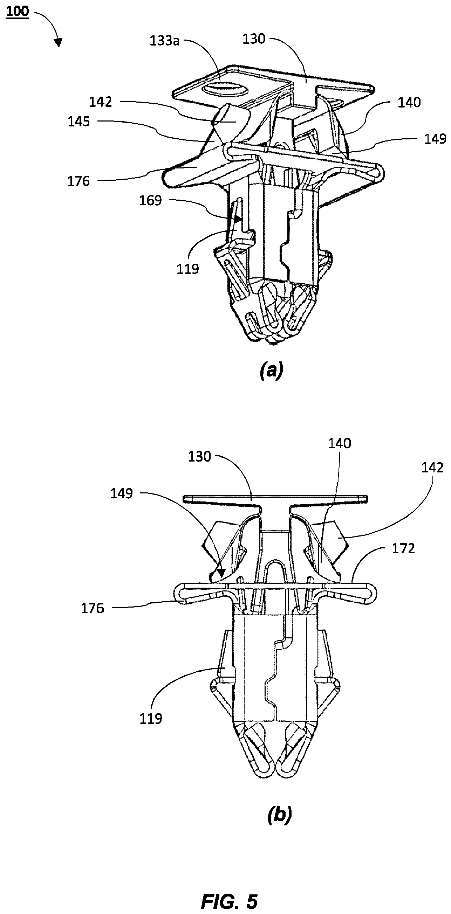

In the example as shown in Figures 3 and 5, the indicator members 140 are provided in a first position in which they are angled so as to each extend away from the first central axis ***A*** and towards the first distal end 114 of the male member 110.

The upper surface 145 of each flap is inclined away from the central axis ***A*** and towards the first proximal end 112. Each upper surface 145 is provided with a projection 142 thereon, the function of which is explained in more detail below.

The lower surface 147 is provided on the opposing surface of the flap to the upper surface 145. In the example shown in Figure 3, the lower surface 147 includes an engagement portion 149 in the form of cam surface. Thus, the engagement portion 149 curves outward from a central portion of the lower surface in which the surface is parallel to the upper surface 145, to an edge portion, which when an indicator member 140 is in its first position is a surface that angled further away from the central axis ***A*.**

Furthermore, the first head portion 130 includes a planar top surface 132 positioned above and, with reference to the first central axis ***A*,** slightly spaced from the indicator member 140. The planar top surface 132 extends transverse to the central axis ***A.*** In this way the top surface 132 provides a smooth, upper face to the proximal end 112 of the male member 110.

The thickness of the indicator member 140 at the elongate shoulder 139 is substantially less than the remainder of the indicator member 140, thereby providing a live hinge between the indicator member 140 and the first head portion 130. In this way, each elongate shoulder 139 allows the respective indicator member 140 to be deflected from its first position in a direction laterally outward with respect to the central axis ***A*** of the male member 110.

Although, in the example shown, the indicator members 140 are each mounted to the central rib 138 via a shoulder 139 with a live hinge, it will be recognised that other arrangements may be provided which directly or indirectly mount the indicator member 140 to the male member 110, so long as each one of the indicator members 140 is adapted to deflect laterally outward from a first position towards a second position.

In the particular example embodiment shown in Figure 3, a first portion of the planar top surface 132 also extends transverse to the first live hinge to overhang a first indicator member 140 in its first position. A first opening 133a (or aperture) is provided in the first portion extending through to the underside 136 of the planar top surface 132 above the first indicator member 140. The first opening 133a is positioned and sized to be able to receive the projection 142 of the first indicator member 140 from the underside of the planar top surface 132.

Similarly, a second portion of the planar top surface 132 also extends transverse to the second live hinge to overhang a second indicator member 140 in its first position. A second opening 133b is provided in the second portion extending through to the underside 136 of the planar top surface 132 above the second indicator member 140. The second opening 133b is positioned and sized to be able to receive the projection 142 of the second indicator member 140 from the underside of the planar top surface 132.

Thus, each one of the projections 142 is configured to operably couple or engage with a respective opening 133a, 133b of the first head portion 130 of the male member 110. In particular, each one of the projections 142 may be of frustoconical shape having a top diameter, adapted to pass through a respective opening 133a, 133b, and a bottom diameter that is larger than the diameter of the respective opening 133a, 133b. Therefore, each one of the openings 133a, 133b is configured stop a respective projection 142 at a predetermined position (i.e. a predetermined insertion depth), with a portion of each one of the projections 142 protruding from the planar top surface 132 (when in the second position) that is suitable to provide tactile feedback, for example, to a user's finger. Here, the head portion 130 and first and second indicator members are cooperating to provide an easily detectable tactile feedback (e.g. relatively smooth top surface before insertion, and projections protruding from the smooth top surface after correct insertion).

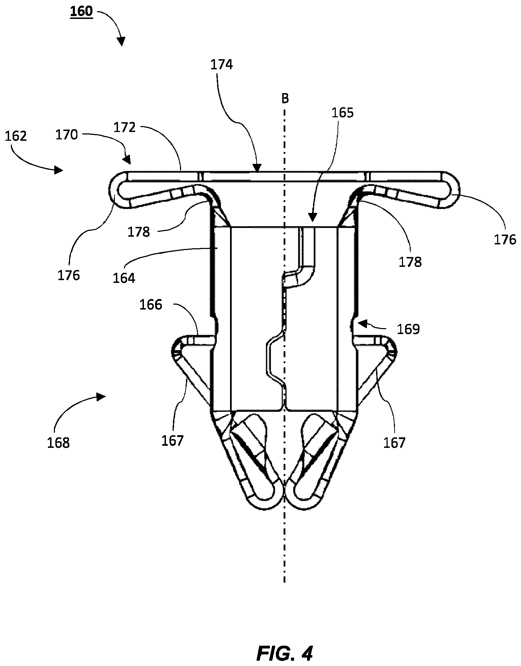

Referring now to Figure 4, the female member 160 is shown in isolation and includes a second head portion 170 at its second proximal end 162 and a body portion 164 extending away from the second head portion 170, along a second central axis ***B*** towards a second distal end 168. A pair of elastically deflectable retaining members 167 is provided at the second distal end 168 of the body portion 164. The retaining members 167 are in the form laterally protruding tangs adapted to fixingly engage with the attachment panel's 300 inner surface 301 when entered through a mounting aperture of said panel 300.

The body portion 164 includes a box-shaped structure formed by the union of two surfaces which are approximately "U"-shaped in transverse cross-section. The body portion 164 thus encloses a central aperture 165 which extends from the second proximal end 162 in the direction of the second central axis ***B*.** The body portion 164 further includes a pair of slots 169, arranged in an opposing pair of its walls and oriented parallel to the second central axis ***B***, opening towards the second distal end 168.

The second head portion 170 includes a substantially rectangularly-shaped plate with a flat upper surface 172 having a cavity 174 extending through the plate, thereby providing access to the central aperture 165. The cavity 174 is sized so that coupling portion 118 of the male member 110 can be freely inserted therethrough.

The plate is arranged transverse to a second central axis ***B*** of the body portion 164. Two edge portions, provided on opposing edges of the plate, form opposing rounded flanges 176, which each fold underneath the plate to form fold portions that extend back towards the second central axis ***B*.** Each of the fold portions is further folded towards and merges into the body portion 164 so that each one forms a rounded lead-in 178 to one side of the box-shaped structure.

The retaining members 167 of the body portion 164 are adapted to fixingly engage with the opening in the surface of the attachment panel 300 when the female member 160 is inserted into it. Each retaining member 167 includes an upper surface 166 configured to bear against an inner surface of the attachment panel 301. Similarly, the rounded flanges 176 of the second head portion 170 are configured to bear against an outer surface 302 of the attachment panel, so as to "sandwich" the attachment panel surface 300 between the retaining members 167 and the rounded flanges 176.

In the example shown in Figure 4, each retaining member 167 includes an inwardly oriented channel. Each channel is aligned with a respective one of the slots 169 arranged in the opposing walls of the body portion 164 so that, together, a slot 169 and a channel are able to cooperatively receive a clamping element 119 of the male member 110 as its first distal end 114 approaches the second distal end 168 of the female member 160.

Referring now to Figure 5, the basic function of the fastening clip 100 is described in respect of the insertion of the male member 110 into the female member 160 only. The fixing of the fastening clip 100 to the attachment surface 300 and the securing of an airbag are described later.

The male member 110 is inserted into the female member 160 by inserting the coupling portion 118 through the cavity 174 of the second head portion 170 and into central aperture 165. As the coupling portion 118 of the male member 110 is initially received into the body portion 164, the legs 121 at the distal end of the coupling portion 118 are squeezed together from their initial spatial orientation, such that the associated clamping elements 119 engage with the inside surface of the body portion 164. At this point, the indicator members 140 are provided in their first position, extending away from the first head portion 130 and away from the first central axis ***A*** towards the first distal end 114, but spaced apart from the flat upper surface 172 of the second head portion 170.

The coupling portion 118 is then further received towards the second distal end 168 of the body portion 164. Accordingly, the first and second head portions 130, 170 continue to move towards one another and the spacing between flat upper surface 172 and the indicator members 140 reduces until the flat upper surface 172 comes into initial contact with the indicator members 140, as shown in Figure 5.

With the flat upper surface 172 in initial contact with the indicator members 140, the first and second head portions 130, 170 are still somewhat spaced apart. Continued movement of the first head portion 130 towards the second head portion 170, thus, causes the flat upper surface 172 to abuttingly engage each indicator member 140. The indicator members 140 are thus deflected by the second head portion 170 towards the first head portion 130 as insertion progresses. Thus, the abutting engagement causes each indicator member 140 to deflect laterally outward from the first central axis ***A*** of the male member 110.

After abutting engagement of the indicator members 140 commences, the first and second head portion 130, 170 still have room to move towards each other. Thus, there remains scope for further insertion of the male member 110 into the female member 160. Consequently, the indicator members 140 will continue to be deflected as the insertion continues. As will be clear from the example shown in Figures 2 to 6, deflection of the indicator members 140 necessarily also deflects their respective projections 142 towards the underside 136 of the first head portion 130.

As mentioned above, a first opening 133a in the first head portion 130 is positioned and sized to be able to receive a projection 142 of the first indicator member 140 from the underside 136 of the first head portion 130. Consequently, the first opening 133a is adapted to receive and to engage a projection 142 as the indicator member 140 on which it is mounted is deflected laterally outward from its first position. The depth of the first opening 133a is less than the height of the projection 142 from the upper surface 145 on which it is mounted. In this way, as the first indicator member 140 is deflected, its projection 142 is able to travel through the first opening 133a to protrude past the planar top surface 132.

Similarly, a second opening 133b is positioned and sized to be able to receive a projection of the second indicator member 140 from the underside 136 of the first head portion 130. Thus, the second opening 133b is adapted to receive and to engage the projection 142 of the second indicator member 140 as it is deflected laterally outward from its first position. The depth of the second opening 133b is less than the height of the projection 142 from the upper surface 145 on which it is mounted. In this way, as the second indicator member 140 is deflected, its projection 142 is able to travel through the second opening 133b to protrude past the planar top surface 132.

At the same time, as the first and second projections 142 protrude past the planar top surface 132, each clamping element 119, which has been engaging and travelling along the inside surface of the body portion 164, reaches and is received into one of cooperative slot- and channel arrangements at the second distal end 168. Thus received, the clamping elements 119 are disengaged from the inside surface of the body portion 164, thereby removing the squeezing force that has deflected the legs 121 towards each and allowing the legs 121 to expand towards to their initial spatial positioning.

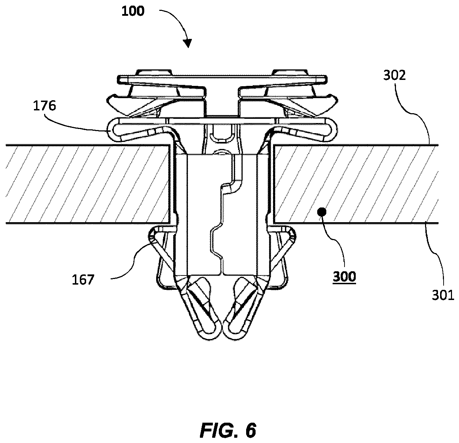

Referring now to Figure 6, when it comes to using the fastening clip 100 to mount an airbag to the attachment panel of a vehicle, the relative movement of the male and female members 110, 160 occurs in the same way as described above. Notably though, the fastening clip 100 components are assembled with the airbag and the whole assembly is inserted into an opening in the attachment panel 300. In this way, as the installer pushes the male member 110 into the female member 160, they concurrently insert the fastening clip 100 into the opening in the attachment panel 300. To install the fastening clip 100 correctly, the installer must push against the planar top surface 132 until (i) the upper surface 302 and lower surface 301 of the attachment panel 300 are sandwiched by the rounded flanges 176 and upper surfaces 166 of the retaining member 167 of the female member 160 and (ii) the clamping elements 119 are received into the cooperative slot and channel arrangements at the second distal end 168 of the female member 160 (see Figure 6, airbag not shown). When these two criteria are met, the fastening clip 100 is thus correctly mounted to the attachment panel 300.

Due to the relative lengths of the male and female members 110, 160, when the above two criteria are met, the indicator members 140 will be correspondingly deflected by the flat upper surface 172, such that each projection 142 protrudes beyond the planar top surface 132. Thus, the installer will directly receive tactile feedback from the protruding projections 142 that the fastening clip 100 has achieved its final assembly position.

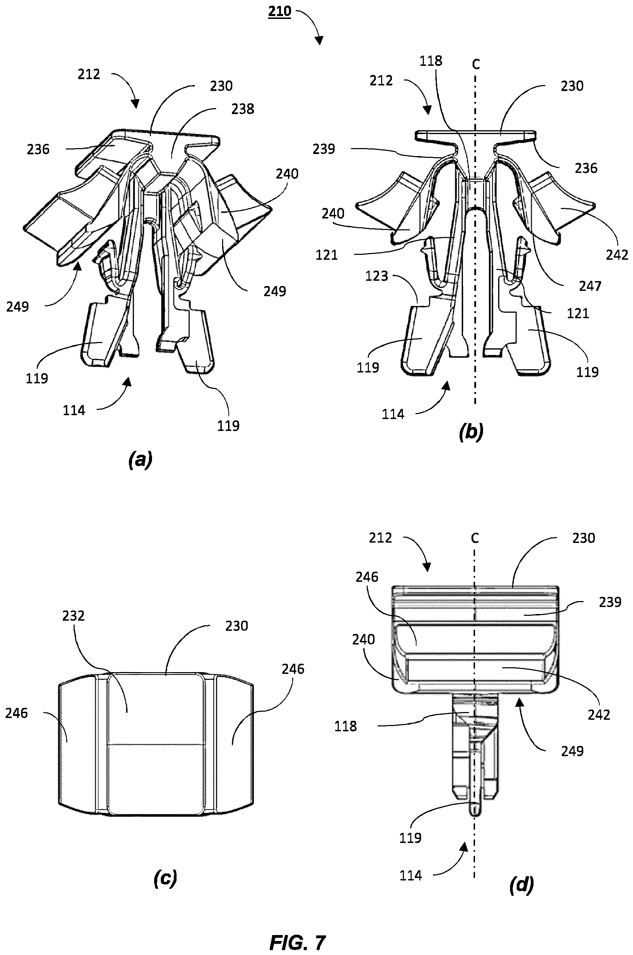

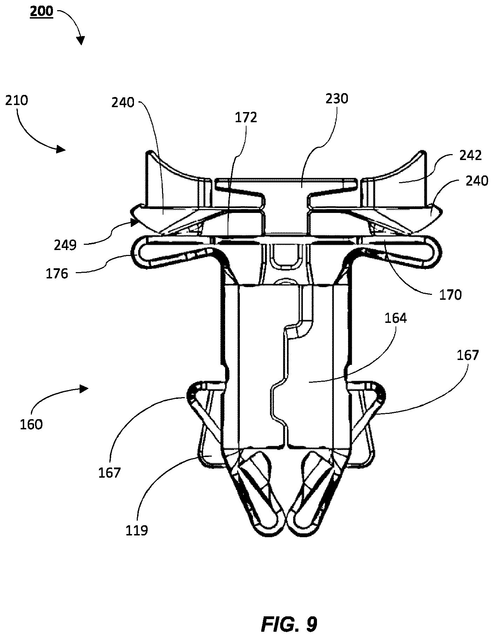

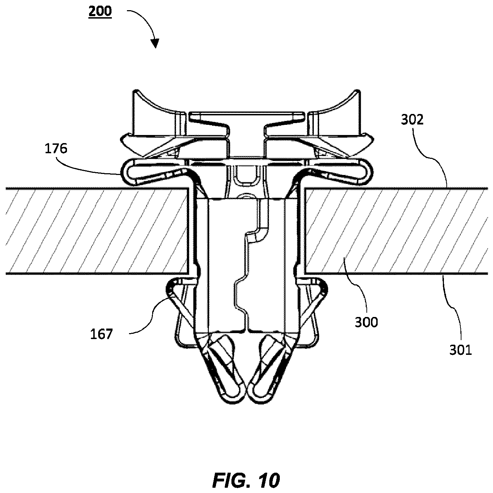

Referring now to Figures 7 to 10, an alternative second example embodiment of the fastening clip 200 of the present invention is shown before, during and after it is used for assembly, i.e. when securing an airbag to an attachment panel 300. In the alternative embodiment, the male member 210 includes a modified first head portion 230 at a first proximal end 212 from which modified indicator members 240 extend towards a first distal end 114.

The coupling portion 118 of the male member 210 extending from the first head portion 230 is identical to the coupling portion 118 of the first embodiment. Further, the female member 160 is common to both embodiments. Accordingly, these features are not discussed in any more detail and the same numbering is retained for features common to both embodiments.

The modified indicator members 240 are similarly adapted to deflect laterally outward from a central axis ***C*** of the male member 210 in order to abuttingly engage with the second head portion 170 and operably engage with the first head portion 230 in use. The improvements of the modified indicator members 240 comprise an alternative assembly verification of the fastening clip 200 detectable by the operator when the fastening clip 200 is correctly assembled, as will be explained below.

The male member 210 is shown in more detail in Figure 7. The coupling portion 118 extends away from the first head portion 230, bifurcating into a pair of resiliently deformable legs 121 which extend in a direction substantially parallel to a first central axis ***C*** towards a first distal end 114. Each leg 121 terminates in a clamping element 119.

The first head portion 230 includes a pair of indicator members 240 opposingly arranged on either side of a central rib 238 provided along the lower surface 236 of the first head portion 230. The indicator members 240 are provided in the form of a pair of flaps each joined at their inner edge to the first head portion 230 by an elongate shoulder 239. In common with the first embodiment, the thickness of the indicator member 240 at the elongate shoulder 239 is substantially less than the remainder. The elongate shoulder 239 thus provides a live hinge between the indicator member 240 and the first head portion 230. Consequently, the indicator member 240 is deflectable from its first position in a direction laterally outward with the respect to the central axis ***C*** of the male member 210.

Again, in isolation, the indicator members 240 are provided in a first position, in which they are angled to each extend away from the first central axis ***C*** and towards the first distal end 114.

The upper surface of each indicator member 240 is inclined away from the central axis ***C*** and towards the first proximal end 212. A platform portion 242 is mounted thereon. The platform portion 242 is a rectangle-based projection provided in a substantial wedge shape. In this way, the platform portion's upper face 246 is angled (or gradually protruding away) relative to the upper surface of the indicator member 240, ascending from a lower edge parallel to and proximal to the shoulder 239 (when in the second position), to a divergingly raised edge at its opposing side.

In common with the indicator members 140 of the first example embodiment, the indicator members 240 of the alternative second example embodiment each include a lower surface 247 provided on the opposing surface of the flap to the upper surface; each lower surface 247 includes a corresponding engagement portion in the form of a cam surface 249.

The first head portion 230 is positioned above and slightly spaced apart from the indicator members 240 with reference to the first central axis ***C***. The first head portion 230 includes a planar top surface 232 which extends transverse to the central axis ***C*** but only extends transversely to a length suitable for cooperation with the platform portion 242 of the indicator members 240. In this way, the planar top surface 232 is provided as a rectangle with a pair of mutually opposed long edges and a pair of mutually opposed short edges. The mutually opposed long edges each provide only a small overhang over an indicator member 240 below.

The planar top surface 232 is positioned and sized so as permit movement around a long edge by each platform portion 242 as their respective indicator portion 240 deflects away from its first position. In moving around a long edge, the platform portion 242 does not clash (or interfere) with the first head portion 230.

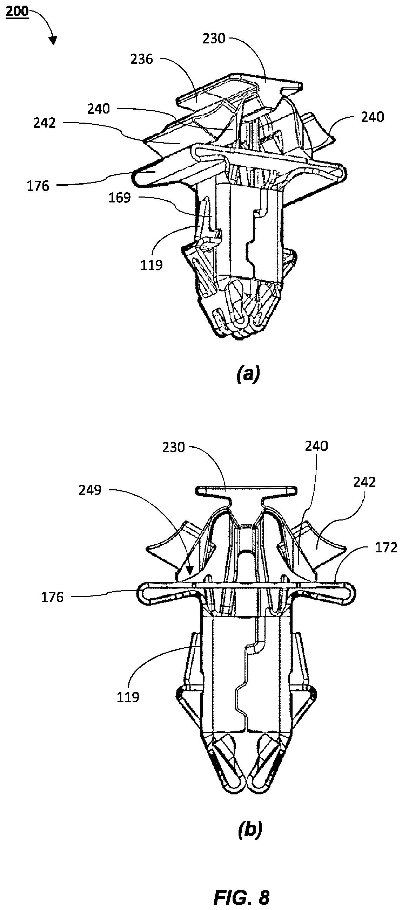

The operation of the second example embodiment 200 is now described with reference to Figures 8, 9 and 10. As the female member 160 and the coupling portion 118 of the male member 110 are unchanged, the male and female members 210, 160 of the alternative embodiment couple together in the same manner as in the first embodiment. Hence, while initially the first and second head portions 230, 170 are spaced apart, they are moved towards one another such that the spacing between flat upper surface 172 and the indicator members 240 reduces until the flat upper surface 172 makes an initial contact with the cam surfaces 249 of the indicator members 240. At the point of initial contact, the indicator members 240 are in their first position.

With the flat upper surface 172 in initial contact with the indicator members 240 the first and second head portion 230, 170 are still spaced apart somewhat. Continued movement of the first head portion 230 towards the second head portion 170, thus causes the flat upper surface 172 to abuttingly engage each indicator member 240. The indicator members 240 are thus deflected by the second head portion 170 towards the first head portion 230. Consequently, the abutting engagement causes each indicator member 240 to deflect laterally outward from the central axis ***C*** of the male member 210.

After abutting engagement of the indicator members 240 commences, the first and second head portions 230, 170 still have room to move towards each other. Thus, as the insertion movement of the male member 210 into the female member 160 continues, the indicator members 240 are further deflected. Deflection of the indicator members 240 necessarily also deflects the respective platform portion 242 in a direction towards the underside 236 of the first head portion 230.

As mentioned above, the planar top surface 232 is positioned and sized so as to permit movement around each of its long edges by the respective platform portions 242 of each indicator member 240 as they are deflected away from their first position and into engagement with the head portion 230, moving the lower edge of the platform portion 242 flush with the upper surface of the planar top surface 232. When in this second position, the outer (i.e. lateral) edge of the platform portion 242 is distinctly pronounced from the planar top surface 232, therefore, providing a tactile feedback to the user while pressing on to the planar top surface 232 during installation. Again, the planar top surface 232 of the head portion 230 and respective indicator members 240 are cooperating, so as to provide a distinctive change in profile between a flat planar top surface 232 (not or not full inserted) and a planar top surface with lateral protrusion (when fully and correctly inserted).

When the fastening clip 200 is used to mount an airbag to the attachment panel 300 of a vehicle, the relative movement of the male and female members 210, 160 occurs in the same way as described for the first example embodiment. With the fastening clip 200 components assembled with the airbag and inserted into an opening in the panel, the installer again pushes the male member 210 into the female member 260, concurrently inserting the fastening clip 200 into the opening. Again, the installer pushes against the planar top surface 232 until the previously mentioned two criteria are met. The fastening clip 200 is thus correctly mounted to the attachment panel 300.

Due to the relative lengths of the male and female members 210, 160, when the above two criteria are met the indicator members 240 will be correspondingly deflected by the flat upper surface 272 such that at least the raised edge of the upper face 246 protrudes beyond the planar top surface 232. As the installer is pressing against this flat upper surface 272 when installing the fastening clip 200, the protrusion provided by the raised edge of the platform portion 242 (relative to the planar top surface 232) provides instant tactile feedback to the user, indicating that the clip 200 has achieved its final assembly position.

In the examples shown, deflection of an indicator member 140, 240 is realised due to a live hinge 139, 239 allowing a pivoting movement of the indicator member 140, 240 with respect to the first head portion 130, 230. However, any other flexible, deformable or pivotable means may be utilised instead of the live hinge. Non-limiting examples may include one or more resiliently deformable straps or fingers, or a spring or pivot means.

Further, it is noted that when a flat upper surface 172 comes into initial contact with an indicator member 140, 240 in its first position, the initial contact areas are where the flat upper surface 172 contacts the edge portions of the respective engagement portion 149, 249, as shown in Figures 5a and 5b, and Figures 8a and 8b. Subsequent outward lateral deflection of the indicator members 140, 240 from the first position thereby deflects the edge portion towards, and potentially beyond the outer edge of the flat upper surface 172, 272 of the female member 160. However, due to the curved cam surface, the contact area between each indicator member 140, 240 and the flat upper surface is able to traverse around the engagement portion 149, 249 towards the central portion of the lower surface, as shown in Figures 2 and 8c. In this way, contact between the engagement portion 149, 249 and the flat upper surface is maintained regardless of the degree of deflection of each indicator member 140, 240. Smooth deflection of the indicator members 140, 240 as each indicator member 140, 240 is deflected from its first position is thus achieved.

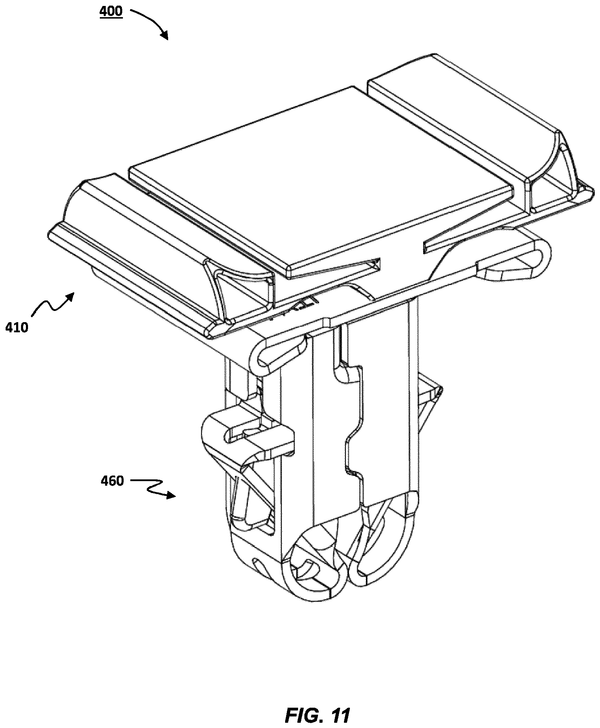

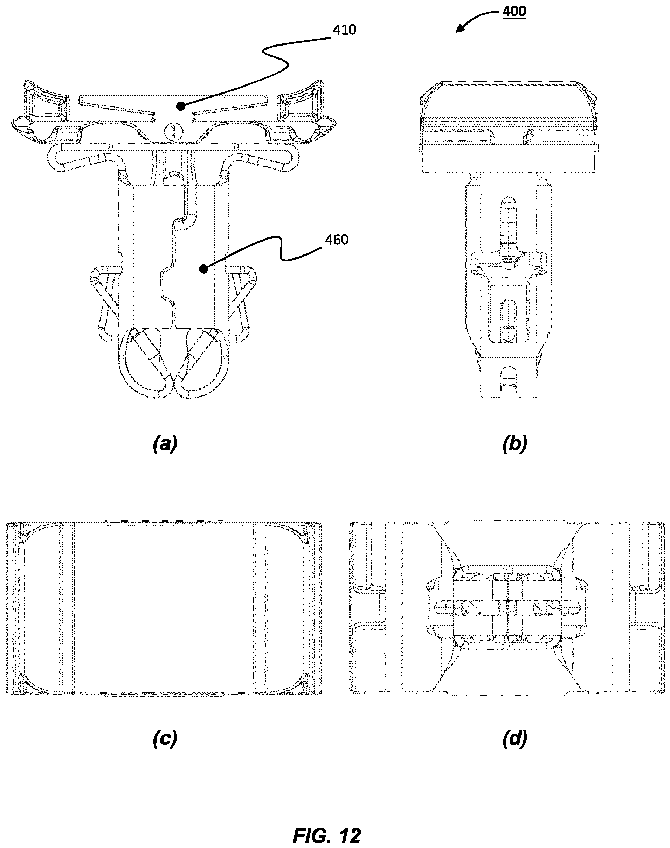

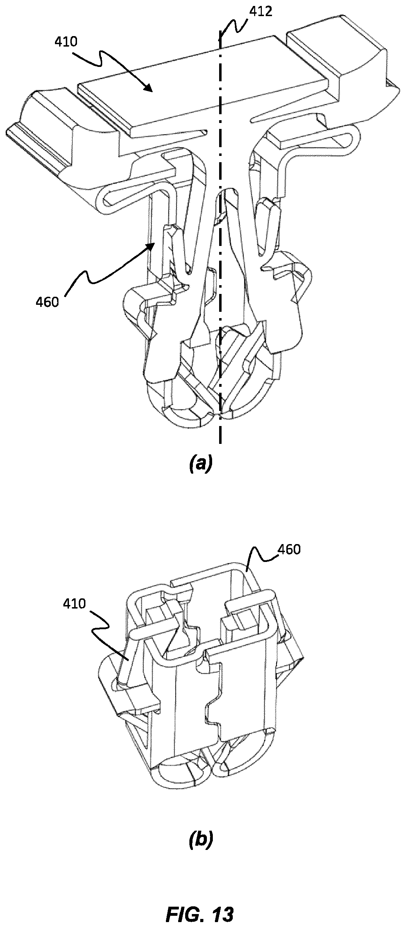

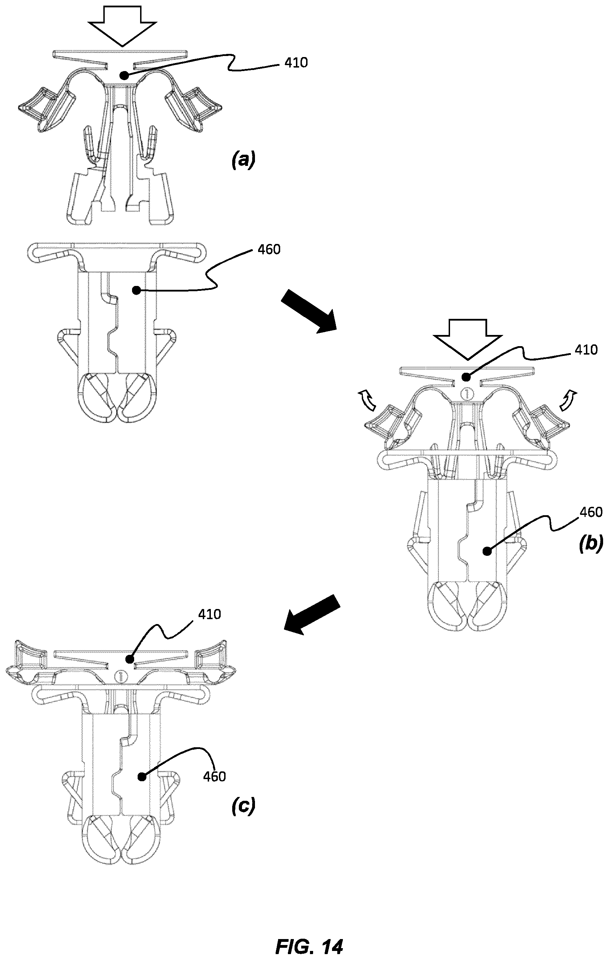

Figures 11 to 14 show another example embodiment of the fastening clip 400 of the present invention. The fastening clip 400 of this example embodiment is in essence equivalent to the previous embodiment of fastening clip 200 (in function and design) with some minor structural variations for specific component parts of the fastening clip 400. In particular, Figure 11 shows a perspective view of the assembled male 410 and female 460 member of the fastening clip 400. Figures 12 (a) to (d) provide front-, side-, top- and bottom-view of the assembled fastening clip 400. Figures 13 (a) and (b) show cross-sectional views of the assembled fastening clip 400, (a) along plane parallel to a central longitudinal axis 412 and (b) along a plane normal to the central longitudinal axis 412. Figures 14 (a) to (c) illustrate a schematic sequence of the male member 410 being inserted into and fully engaged with the female member 460.

Alternatively, suitable number of indicator members may be used in connection with the male member of the fastening clip assembly of the present invention.

It will be appreciated by persons skilled in the art that the above embodiments have been described by way of example only and not in any limiting sense, and that various alterations and modifications are possible without departing from the scope of the invention as defined in the appended claims.

## Claims

1. A fastening clip assembly (100, 200) for mounting a first component to a second component (300), comprising:
a male member (110, 210), having a first head portion (130, 230), provided at a first proximal end (112, 212) along a first central axis (A, C), and a coupling portion (118), extending from said first head portion (130, 230) along said first central axis (A, C) towards a first distal end (114, 214);
a female member (160, 260), comprising a second head portion (170), provided at a second proximal end (162) along a second central axis (B), a body portion (164), extending from said second head portion (170) along said second central axis (B) towards a second distal end (168), said body portion (164) having a central aperture (165) configured to couplingly receive said coupling portion (118) of said male member (110, 210) and at least one elastically deflectable retaining member (167), adapted to fixingly engage when inserted into an orifice of the second component (300), and
at least one indicator member (140, 240), extending from said first head portion (130, 230) and away from said first central axis (A, C) towards said first distal end (114, 214), adapted to deflect laterally outward from a first position towards a second position and operably engage with said first head portion (130, 230), when abuttingly engaged with an upper surface (172, 272) of said second head portion (170), during use; and
**characterised in that** said first head portion (130, 230) comprises a substantially planar top surface (132, 232) extending in a direction substantially transverse to said first central axis (A, C); and
**in that** at least a portion of said at least one indicator member (140, 240) is configured to protrude past said substantially planar top surface (132, 232) when said at least one indicator member (140, 240) is in said second position.

2. A fastening clip assembly according to claim 1, wherein said at least one indicator member (140, 240) is configured to provide a tactile feedback when in said second position.

3. A fastening clip assembly according to claim 2, wherein said at least one indicator member (140, 240) is configured to move into said second position when said male member (110, 210) is operably coupled with said female member (160, 260).

4. A fastening clip assembly according to any one of the preceding claim, wherein said indicator member (140, 240) is resiliently biased towards said first position.

5. A fastening clip assembly according to any one of the preceding claims, wherein said at least one portion of said at least one indicator member (140, 240) is a projection (142, 242) from an indicator top surface (145) of said at least one indicator member (140, 240).

6. A fastening clip assembly according to any one of the preceding claims, wherein said substantially planar top surface (132, 232) comprises at least one aperture (133a, 133b) adapted to traversingly receive at least said portion of said at least one indicator member (140)

7. A fastening clip assembly according to any one of the preceding claims, wherein said coupling portion (118) comprises at least one clamping element (119) adapted to operably engage with said retaining member (167) when said male member (110, 210) is fixingly engaged with said female member (160, 260).

8. A fastening clip assembly according to any one of the preceding claims, wherein said at least one indicator member (140, 240) comprises an engagement portion (149) configured to operably engage with said second head portion (170) during use.

9. A fastening clip assembly according to any one of the preceding claims, wherein said at least one indicator member (140, 240) comprises a first indicator member and a second indicator member, radially opposed to said first indicator member with respect to said first central axis (A, C), each one extending from said first head portion (130, 230) and away from said first central axis (A, C) towards said first distal end (114, 214) when in said first position.

10. A fastening clip assembly according to any one of the preceding claims, wherein said first central axis (A, C) and said second central axis (B) are arranged coaxial when said male member (110, 210) is operably engaged with said female member (160, 260).

## Patentansprüche

1. Befestigungsklammeranordnung (100, 200) zum Anbringen einer ersten Komponente an einer zweiten Komponente (300), aufweisend:
ein Steckelement (110, 210), das einen ersten Kopfabschnitt (130, 230), der an einem ersten proximalen Ende (112, 212) entlang einer ersten zentralen Achse (A, C) vorgesehen ist, und einen Kopplungsabschnitt (118) aufweist, der sich von dem ersten Kopfabschnitt (130, 230) entlang der ersten zentralen Achse (A, C) zu einem ersten distalen Ende (114, 214) erstreckt;
ein Aufnahmeelement (160, 260), das einen zweiten Kopfabschnitt (170), der an einem zweiten proximalen Ende (162) entlang einer zweiten zentralen Achse (B) vorgesehen ist, und einen Körperabschnitt (164) aufweist, der sich von dem zweiten Kopfabschnitt (170) entlang der zweiten zentralen Achse (B) zu einem zweiten distalen Ende (168) hin erstreckt, wobei der Körperabschnitt (164) eine zentrale Öffnung (165) aufweist, die so konfiguriert ist, dass sie den Kopplungsabschnitt (118) des Steckelements (110, 210) koppelnd aufnimmt und zumindest ein elastisch auslenkbares Halteelement (167) aufweist, das so ausgelegt ist, dass es in einen festen Eingriff kommt, wenn es in eine Öffnung der zweiten Komponente (300) eingeführt wird, und
zumindest ein Anzeigeelement (140, 240), das sich von dem ersten Kopfabschnitt (130, 230) und von der ersten zentralen Achse (A, C) weg in Richtung des ersten distalen Endes (114, 214) erstreckt und so ausgelegt ist, dass es von einer ersten Position in Richtung einer zweiten Position seitlich nach außen auslenkt und bei der Verwendung betriebsfähig mit dem ersten Kopfabschnitt (130, 230) in Eingriff kommt, wenn es bündig mit einer oberen Fläche (172, 272) des zweiten Kopfabschnitts (170) in Eingriff steht; und
**dadurch gekennzeichnet, dass** der erste Kopfabschnitt (130, 230) eine im Wesentlichen ebene obere Fläche (132, 232) aufweist, die sich in einer Richtung erstreckt, die im Wesentlichen quer zu der ersten zentralen Achse (A, C) verläuft; und
dadurch, dass zumindest ein Abschnitt des zumindest einen Anzeigeelements (140, 240) so konfiguriert ist, dass er über die im Wesentlichen ebene obere Fläche (132, 232) vorsteht, wenn sich das zumindest eine Anzeigeelement (140, 240) in der zweiten Position befindet.

2. Befestigungsklammeranordnung nach Anspruch 1, wobei das zumindest eine Anzeigeelement (140, 240) so konfiguriert ist, dass es eine taktile Rückmeldung vorsieht, wenn es sich in der zweiten Position befindet.

3. Befestigungsklammeranordnung nach Anspruch 2, wobei das zumindest eine Anzeigeelement (140, 240) so konfiguriert ist, dass es sich in die zweite Position bewegt, wenn das Steckelement (110, 210) betriebsfähig mit dem Aufnahmeelement (160, 260) gekoppelt ist.

4. Befestigungsklammeranordnung nach einem der vorhergehenden Ansprüche, wobei das Anzeigeelement (140, 240) elastisch in Richtung der ersten Position vorgespannt ist.

5. Befestigungsklammeranordnung nach einem der vorhergehenden Ansprüche, wobei der zumindest eine Abschnitt des zumindest einen Anzeigeelements (140, 240) ein Vorsprung (142, 242) von einer Anzeigeoberseite (145) des zumindest einen Anzeigeelements (140, 240) ist.

6. Befestigungsklammeranordnung nach einem der vorhergehenden Ansprüche, wobei die im Wesentlichen ebene obere Fläche (132, 232) zumindest eine Öffnung (133a, 133b) aufweist, die so ausgelegt ist, dass sie zumindest den Abschnitt des zumindest einen Anzeigeelements (140) quer aufnimmt.

7. Befestigungsklammeranordnung nach einem der vorhergehenden Ansprüche, wobei der Kopplungsabschnitt (118) zumindest ein Klemmelement (119) aufweist, das so ausgelegt ist, dass es betriebsfähig mit dem Halteelement (167) in Eingriff kommt, wenn das Steckelement (110, 210) fest mit dem Aufnahmeelement (160, 260) in Eingriff steht.

8. Befestigungsklammeranordnung nach einem der vorhergehenden Ansprüche, wobei das zumindest eine Anzeigeelement (140, 240) einen Eingriffsabschnitt (149) aufweist, der so konfiguriert ist, dass er bei der Verwendung mit dem zweiten Kopfabschnitt (170) betriebsfähig in Eingriff steht.

9. Befestigungsklammeranordnung nach einem der vorhergehenden Ansprüche, wobei das zumindest eine Anzeigeelement (140, 240) ein erstes Anzeigeelement und ein zweites Anzeigeelement aufweist, das dem ersten Anzeigeelement in Bezug auf die erste zentrale Achse (A, C) radial gegenüberliegt, wobei sich beide von dem ersten Kopfabschnitt (130, 230) und von der ersten zentralen Achse (A, C) weg in Richtung des ersten distalen Endes (114, 214) erstrecken, wenn es sich in der ersten Position befindet.

10. Befestigungsklammeranordnung nach einem der vorhergehenden Ansprüche, wobei die erste zentrale Achse (A, C) und die zweite zentrale Achse (B) koaxial angeordnet sind, wenn das Steckelement (110, 210) mit dem Aufnahmeelement (160, 260) betriebsfähig in Eingriff steht.

## Revendications

1. Ensemble de pince de fixation (100, 200) pour le montage d'un premier élément sur un deuxième élément (300), comprenant :
un élément mâle (110, 210), ayant une première partie de tête (130, 230), fournie sur une première extrémité proximale (112, 212) le long d'un premier axe central (A, C), et une partie de couplage (118), s'étendant à partir de ladite première partie de tête (130, 230) le long dudit premier axe central (A, C) vers une première extrémité distale (114, 214) ;
un élément femelle (160, 260), comprenant une deuxième partie de tête (170), fournie sur une deuxième extrémité proximale (162) le long d'un deuxième axe central (B), une partie de corps (164), s'étendant à partir de ladite deuxième partie de tête (170) le long dudit deuxième axe central (B) vers une deuxième extrémité distale (168), ladite partie de corps (164) ayant une ouverture centrale (165) configurée pour recevoir de manière couplée ladite partie de couplage (118) dudit élément mâle (110, 210) et au moins un élément de retenue élastiquement déformable (167), adapté pour s'engager de manière fixe lorsqu'il est inséré dans un orifice du deuxième élément (300), et
au moins un élément indicateur (140, 240), s'étendant à partir de ladite première partie de tête (130, 230) et s'éloignant dudit premier axe central (A, C) vers ladite première extrémité distale (114, 214), adapté pour fléchir latéralement vers l'extérieur à partir d'une première position vers une deuxième position et s'engager de manière opérationnelle avec ladite première partie de tête (130, 230), lorsqu'il est engagé en butée avec une surface supérieure (172, 272) de ladite deuxième partie de tête (170), durant l'utilisation ; et
**caractérisé en ce que** ladite première partie de tête (130, 230) comprend une surface supérieure sensiblement plane (132, 232) s'étendant dans une direction sensiblement transversale audit premier axe central (A, C) ; et
**en ce qu'**au moins une partie dudit au moins un élément indicateur (140, 240) est configurée pour faire saillie au-delà de ladite surface supérieure sensiblement plane (132, 232) lorsque ledit au moins un élément indicateur (140, 240) est dans ladite deuxième position.

2. Ensemble de pince de fixation selon la revendication 1, dans lequel ledit au moins un élément indicateur (140, 240) est configuré pour fournir une rétroaction tactile lorsqu'il est dans ladite deuxième position.

3. Ensemble de pince de fixation selon la revendication 2, dans lequel ledit au moins un élément indicateur (140, 240) est configuré pour se déplacer dans ladite deuxième position lorsque ledit élément mâle (110, 210) est couplé de manière opérationnelle avec ledit élément femelle (160, 260).

4. Ensemble de pince de fixation selon l'une quelconque des revendications précédentes, dans lequel ledit élément indicateur (140, 240) est sollicité élastiquement vers ladite première position.

5. Ensemble de pince de fixation selon l'une quelconque des revendications précédentes, dans lequel ladite au moins une partie dudit au moins un élément indicateur (140, 240) est une saillie (142, 242) à partir d'une surface supérieure d'indicateur (145) dudit au moins un élément indicateur (140, 240).

6. Ensemble de pince de fixation selon l'une quelconque des revendications précédentes, dans lequel ladite surface supérieure sensiblement plane (132, 232) comprend au moins une ouverture (133a, 133b) adaptée pour recevoir transversalement au moins ladite partie dudit au moins un élément indicateur (140)

7. Ensemble de pince de fixation selon l'une quelconque des revendications précédentes, dans lequel ladite partie de couplage (118) comprend au moins un élément de serrage (119) adapté pour s'engager de manière opérationnelle avec ledit élément de retenue (167) lorsque ledit élément mâle (110, 210) est engagé de manière fixe avec ledit élément femelle (160, 260).

8. Ensemble de pince de fixation selon l'une quelconque des revendications précédentes, dans lequel ledit au moins un élément indicateur (140, 240) comprend une partie d'engagement (149) configurée pour s'engager de manière opérationnelle avec ladite deuxième partie de tête (170) durant l'utilisation.

9. Ensemble de pince de fixation selon l'une quelconque des revendications précédentes, dans lequel ledit au moins un élément indicateur (140, 240) comprend un premier élément indicateur et un deuxième élément indicateur, radialement opposé audit premier élément indicateur par rapport audit premier axe central (A, C), chacun s'étendant à partir de ladite première partie de tête (130, 230) et s'éloignant dudit premier axe central (A, C) vers ladite première extrémité distale (114, 214) lorsqu'il est dans ladite première position.

10. Ensemble de pince de fixation selon l'une quelconque des revendications précédentes, dans lequel ledit premier axe central (A, C) et ledit deuxième axe central (B) sont agencés de manière coaxiale lorsque ledit élément mâle (110, 210) est engagé de manière opérationnelle avec ledit élément femelle (160, 260).
